# EUROPEAN PATENT SPECIFICATION

(11) **EP 2 763 873 B1**
(45) Date of publication and mention of the grant of the patent: **20.04.2016**
(21) Application number: 12719801.8
(22) Date of filing: 30.01.2012
(51) Int. Cl.: B60R 21/11, B60R 21/13

(54) **A VEHICLE UPPER PROTECTION STRUCTURE**
EINE OBERE KRAFTFAHRZEUGSCHUTZSTRUKTUR
UNE STRUCTURE DE PROTECTION POUR PARTIE SUPÉRIEURE D'UN VÉHICULE

(30) Priority: 07.10.2011 IT PC20110013
(43) Date of publication of application: 13.08.2014
(73) Proprietor: Merli, Giovanni, 29122 Piacenza (IT)
(72) Inventor: Merli, Giovanni, 29122 Piacenza (IT)
(74) Representative: Celestino, Marco
(86) International application number: PCT/IB2012/050431
(87) International publication number: WO 2013/050885

(56) References cited:
- EP-A1- 1 602 563
- WO-A1-00/18678
- DE-U1- 29 609 704
- FR-A1- 2 910 411
- US-A- 3 599 813
- US-A- 3 829 121
- US-A- 3 976 323

## Description

### Field of the invention

The present invention relates to a structure to protect the driver cabin of industrial vehicles, for example construction and mining vehicles, in case of fall from the above of heavy bodies and/or in case of tilting.

More in detail, the invention relates to a structure to limit the crushing damage on the cabin of the vehicle, preserving the safety of the driver.

### Background of the invention

As well known, industrial vehicles have a compartment or cabin for the driver and for possible operators assigned to other manoeuvres and possible passengers. In some working environments, for example quarries and open pits, the driver or manoeuvre cabin of the relevant industrial vehicles can be subject to damages in case of fall of heavy objects such as stone blocks, or in case of tilting of the vehicle, as it may occur in sloped regions.

In particular, cases of serious injuries or death of drivers and/or operators are frequent after accidental events of this kind. It is therefore clear the need of protecting the driver and/or manoeuvre cabins of the industrial vehicles. For this reason, a continuous search of protection means which would render as safe as possible the cabins of the vehicles has been carried out.

US3599813 discloses a rollover structure of a vehicle comprising a pair of spaced-apart, post members. Each post member has a base secured to one side of the front frame of the vehicle and extends in a substantially upward direction therefrom. The rollover structure also comprises a top member that extends between the post members and also extends rearward over the operator's station of the rear frame. However, this solution has the drawback of partially hindering the operator's sight. Moreover, in the case of trucks, such solution cannot be use since tilting of the cabin would be impeded.

US2003111281 describes a protection structure for the cabins of industrial vehicles. In a first version, the structure has a protection portion connected to the cabin. The installation of this protection structure on an existing requires changes to the cabin. According to safety laws in some countries, this causes a loss of the original homologation and the need of a new homologation of the cabins of existing vehicles. These laws are valid also in European countries and, as well known, similar rules exist also in case of modifications to the frame of the vehicles. The costs and the time required by such procedure discourage the adoption of this protection structure. In a second version, a portion of the structure that protects the front glass can be pivotally opened and closed by means of rotation about a pivot axis. This structure is then cumbersome and complicated to use

FR2910411 relates to a protection for a cabin, and comprises a rear structure and a front structure. The rear structure has a lower portion consisting of uprights and crossbars, and an upper portion which extends horizontally with an own crossbar up to the rear wall of the cabin. The front structure has also an upper crossbar integral to the front part of the frame. The two front and rear structures are such that the line that ideally connects the two crossbars extends above the zone occupied by the driver. This way, in case of tilting, the crushing of the cabin can be limited. The proposed structure has a high structural and installation complication and, furthermore, does not present an appropriate protection in case of fall of heavy objects on the cabin, such as stone blocks and the like.

Another protection structure, as described in JP2005170112, is applicable to cabins of existing vehicles, but requires a number of changes to the cabin. The protection is arranged above the cabin and integral to the frame to which the cabin is mounted. Even in this case, problems arise concerning homologation of the cabin, as above described.

Another protection structure, as disclosed in US5165707, comprises a roll-bar for trucks that can be lifted. Other documents that refer to a same technical field are the following: WO2010077854; WO2008135284; EP2083124; EP1728689; EP1645493; EP1454821; US4451079.

In addition to the above specific drawbacks, all the structures indicated above make it difficult or even impossible an operator's access for maintenance in the zone behind the cabin. The covering portions of such structures, which are arranged above the cabin, limit or prevent this accessibility. In particular, the above indicated protection structures do not allow the pivoting, i.e. the tilting, of the cabin, usually forwards, as provided in most of the industrial vehicles such as trucks and the like, to permit maintenance operations.

### Summary of the invention

It is therefore a feature of the present invention to provide a protection structure for the cabin of a vehicle, which prevents the cabin from getting crushed both in case of heavy bodies falling upon the cabin, and in case of tilting of the vehicle about a longitudinal axis, which may occur, in particular, in workplaces where the ground is uneven or sloped, such as in quarries, and the like.

It is a particular feature of the present invention to provide such a protection structure that can be mounted to existing vehicles without modifying the cabin and the frame of the vehicle, in order not to require new homologation of the vehicle.

It is another particular feature of the present invention to provide such a protection structure that allows an operator to access the space behind the cabin and to make maintenance to the vehicle.

It is also a particular feature of the present invention to provide such a protection structure which allows a forward rotation of the cabin, as it is provided in some vehicles to allow maintenance behind the cabin.

It is a further particular feature of the present invention to provide such a protection structure that has a reduced encumbrance and that is easy to build and to install.

These and other objects are achieved by a vehicle according to claim 1 consisting of a truck, comprising a frame, a cabin, i.e. a driver compartment, fixed at a front position of the frame, a protection structure for the cabin, the structure comprising:
- a lower connection portion connected to the frame of the vehicle in a way disengaged from the cabin,
- an upright in use vertically mounted to the lower connection portion and behind the cabin;
- a cover means for the cabin, said cover means extending forward from the upright, and cantilevered as a plane shield above the cabin contactless with respect to the cabin.

This way, the protection structure:
- is disengaged from the cabin, therefore it can be used also on vehicles already circulating and does not require either expensive modifications to the vehicle or modifications to the cabin;
- can be simply connected to already existing structures of the vehicle without modifying them, and with no need of any particular authorization by the vehicle manufacturers;
- enables the operators to easily maintain the vehicle with no need of dismantling the structure from the vehicle.

In other words, in order to achieve the above mentioned objects, a protection structure is proposed that is not directly connected to the cabin, and that is adapted to be used also on already type-approved and already circulating vehicles. In particular, the proposed structure is adapted to be mounted to a wide range of vehicles, without requiring either expensive structural changes or possible further type-approval of the vehicle as modified. In fact, the structure can be mounted to various types of vehicles without affecting the cabin but simply fixing it to the existing frame, without modifying either the structure itself, or the frame, or the cabin.

Furthermore, an easy installation of the structure enables common vehicle suppliers to mount it with no need of any particular authorization by the vehicle manufacturer.

In addition, a preferred embodiment of the protection structure according to the invention solves the technical problem of withdrawing the horizontal portion when a maintenance of the cabin has to be performed.

Preferably, the cover means has a width at least substantially equal to a width of the cabin. This way, the side edges of the cover means are arranged to protect the cabin also in case of tilting of the vehicle about a substantially or mainly longitudinal tilt axis, with respect to the vehicle.

Preferably, the cover means has a longitudinal length suitable for covering the cabin substantially up to a front portion of the cabin. This way, the front edge of the cover means is arranged to protect the cabin also in case of a forward tilting of the vehicle about a substantially or mainly transversal axis, with respect to the vehicle.

Preferably, the cover means of the protection structure comprises a continuous shield. Alternatively, the cover means may comprise a plurality of cantilevered, i.e. comb-like, linear parallel cover elements, or stiffened by a frame, or a reticular structure.

In an exemplary embodiment, the protection structure comprises at least two uprights to which crosspieces are connected. In particular, the crosspieces, which are provided to stiffen the structure, can be transversal plates or crossbars. A plurality of braces may be associated to the crosspieces, in order to provide a reticular structure, which has a much greater stiffening effect on the structure.

Advantageously, said upright is arranged at an angle with respect to the cabin. In particular, the upright is arranged to form an angle with a vertical line, set between 2° and 10°, in particular set between 3° and 8°, preferably an angle of about 5°. This way, with a same longitudinal position of the connection portion, the cover means can be projected more forward, which makes it easier to protect particularly elongated cabins, and/or to protect the front portion of a cabin.

In particular, the lower connection portion comprises a fastening plate for fastening to the frame, in particular a flange.

The structure may comprise a counterframe that is adapted to be reversibly mounted to the frame of the vehicle, in order to avoid modifications to the frame, the counterframe and the lower portion of the structure having a mutual connection means, in particular, a couple of flanges. This modular connection system makes it easier to mount the protection structure on the vehicle, without modifying the frame.

According to another aspect of the invention, the cover means of the structure is movable with respect to the lower connection portion, between a use position, in which the cover means is arranged above the cabin, in order to protect the cabin in case of fall of heavy bodies onto the cabin and/or in case of tilting of the vehicle, and a maintenance position, in which the cover means is arranged at a distance from the cabin, said distance suitable for allowing the cabin to balance, i.e. to tilt, typically forward, from a use position to a maintenance position and/or suitable for allowing an operator to enter a space between the cabin and the upright.

In an exemplary embodiment of the structure provided with mobile cover means, the cover means is rotatably arranged with respect to the lower connection portion.

In an exemplary embodiment, the upright of the structure is integral to the lower connection portion, and the cover means is rotatably arranged about a rotation axis integral to the upright.

In an exemplary embodiment, the rotation axis of the cover means with respect to the upright is horizontal.

In an exemplary embodiment, the cover means comprises two shields pivotally arranged about respective vertical rotation axes integral to the upright.

In an exemplary embodiment, the upright is integral to the cover means, and the cover means, along with the upright, is pivotally arranged about an axis integral to the lower connection portion. Such exemplary embodiment is particularly easy to be built, and is adapted to vehicles that do not have bulky items or components behind the upright or the uprights.

In an exemplary embodiment, the cover means of the protection structure is slidingly arranged with respect to the lower connection portion.

In an exemplary embodiment, the upright or the uprights of the protection structure is/are integral to the lower connection portion, and the cover means is slidingly arranged along a predetermined sliding direction.

In an exemplary embodiment, the sliding direction, in use, is a longitudinal direction of the vehicle, and forms an angle set between 5° and 10° with respect to the horizontal, in particular it forms an angle set between 6° and 8°, preferably it forms an angle of about 7°. The arrangement at an angle of the cover means assists stable driving of a vehicle that is provided with the protection structure.

In an exemplary embodiment, the upright of the protection structure is integral to the cover means, and the cover means, along with the upright, is slidingly arranged along the upright.

In an exemplary embodiment, the protection structure comprises a lock means for locking the cover means at the use position. The lock means may comprise pins that are firmly inserted within corresponding aligned holes of the cover means and of an element integral to the connection portion, typically of an element integral to the upright. Abutment elements may also be provided for preventing the cover means from moving beyond the use position when the cover means performs the displacement as needed for bringing the structure from the maintenance configuration to the use configuration.

Advantageously, the protection structure comprises an actuation means, in particular a hydraulic actuation means, for bringing the cover means from the actual use position to the maintenance position and/or vice-versa. The actuation means advantageously comprises a control device mounted at a position accessible to an operator. The protection structure, due to this automatic handling possibility, enables operators to easily perform a maintenance of the vehicle without dismantling the structure from the vehicle. acting on a remote drive, the structure switches from the use configuration to the maintenance configuration, creating the space for an operator to attain the area where the maintenance has to be carried out.

Preferably, the protection structure comprises a curved connection portion located between the upright and the cover means.

In an exemplary embodiment, the connection portion comprises a rear connection portion of the cover means and an upper connection portion of the upright, the rotatable connection arranged between the rear portion and the upper portion.

It falls within the field of the invention also a vehicle, in particular a truck, that has a frame and a cabin fixed at a front position of the frame, and has a protection structure for the cabin, the structure comprising:
- a lower connection portion arranged to be connected to the frame of the vehicle in a way disengaged from the cabin,
- an upright in use vertically mounted to the lower connection portion and behind the cabin;
- a cover means of the cabin, said cover means extending from the upright and adapted to be cantilevered such as a plane shield above the cabin, contactless with respect to the cabin.

### Brief description of the Drawings

The invention will be now shown with the following description of an exemplary embodiment thereof, exemplifying but not limitative, with reference to the attached drawings in which:
- Fig. 1 is a diagrammatical perspective view of a protection structure according to an exemplary embodiment of the invention, in which the cover means is fixed with respect to the lower vehicle frame connection portion;
- Fig. 2 is a diagrammatical perspective view of a protection structure according to another exemplary embodiment with a fixed cover means;
- Fig. 3 is a diagrammatical perspective view of a protection structure according to a further exemplary embodiment with a fixed cover means, and with a vehicle frame connection portion that has a reticular structure;
- Fig. 4 is a diagrammatical perspective view of a protection structure according to an exemplary embodiment in which the cover means is pivotally articulated with the vehicle connection element;
- Fig. 5 shows in detail the connection between the protection structure and the frame of the vehicle;
- Fig. 6 is a diagrammatical perspective view of another protection structure provided with a movable or articulated cover means;
- Fig. 7 is a perspective view of a detail of the articulation between the cover means and the vehicle connection portion of a structure as shown in Fig. 6 or in Fig. 4;
- Fig. 8 is a sectional view of the detail of Fig. 7;

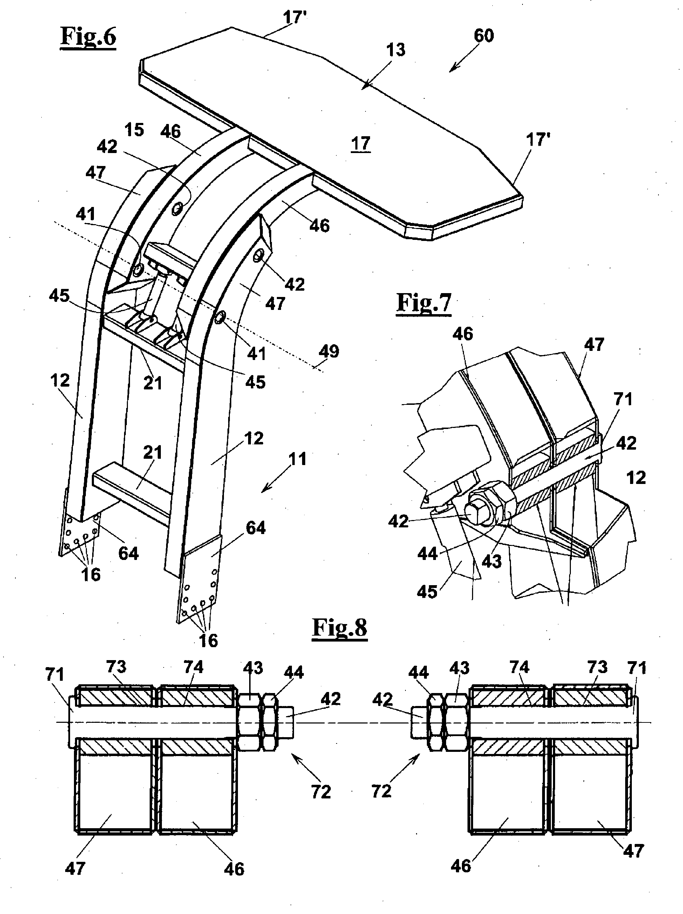

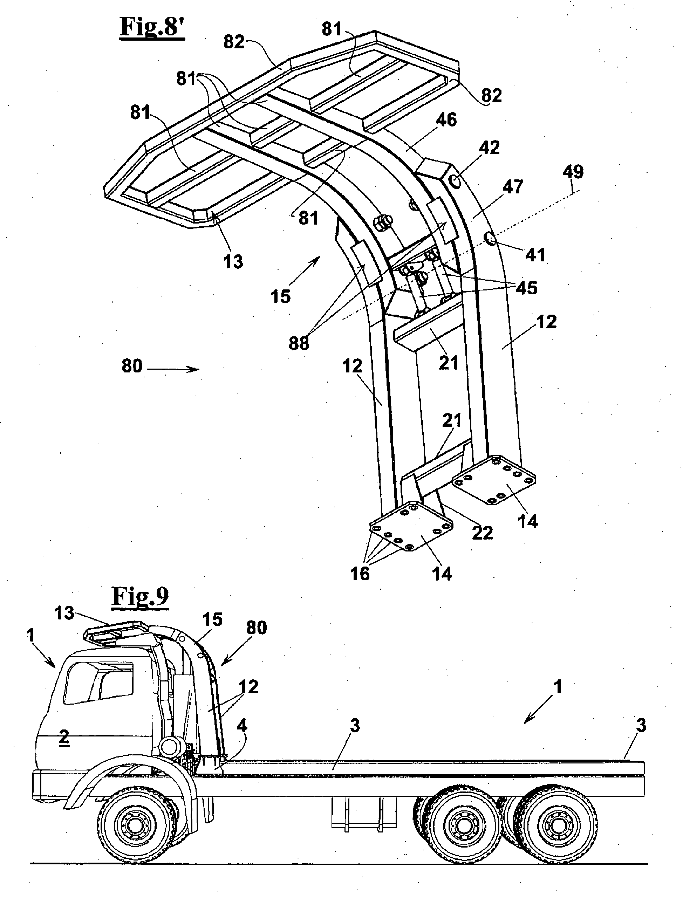

- Fig. 8' is a perspective bottom view of a protection structure according to an exemplary embodiment, in which the cover means comprises a plurality of protection elements connected by a frame;
- Fig. 9 shows a perspective view of the structure of Fig. 8' when mounted to a truck;

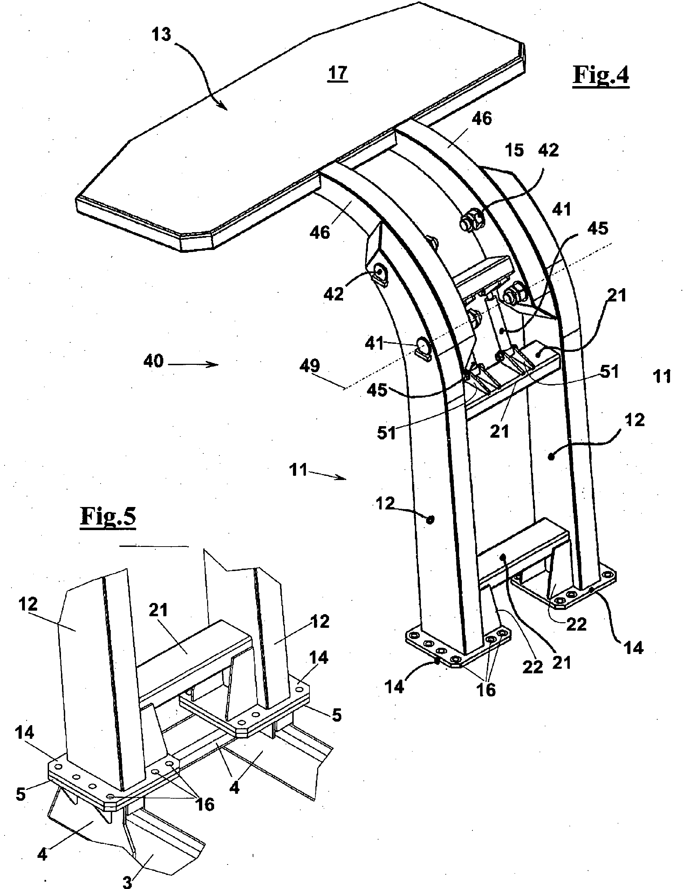

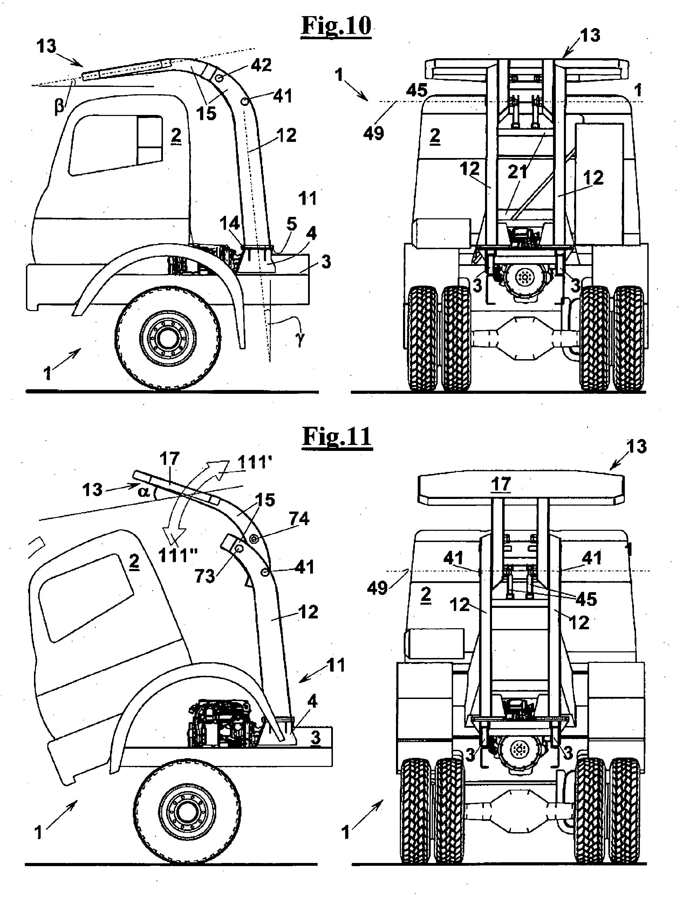

- Fig. 10 shows a side view and a rear view of a protection structure as shown in Fig. 4 mounted to a truck, in a use configuration;
- Fig. 11 shows a side view and a rear view of the protection structure and of the truck of Fig. 10 in a maintenance configuration;

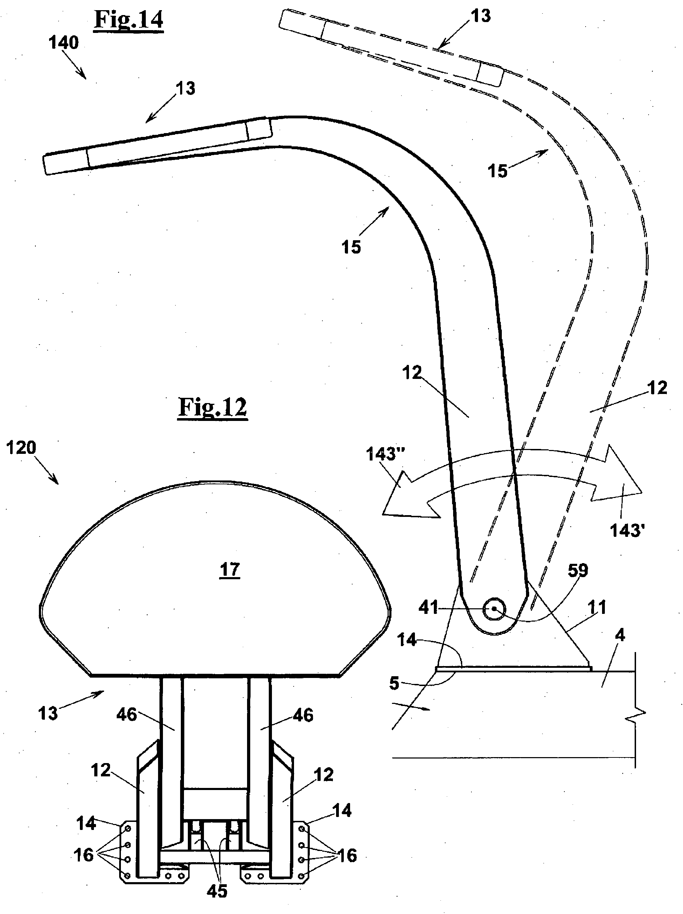

- Fig. 12 shows a protection structure according to a further exemplary embodiment of the invention, with a different outline of the shield of the cover means;

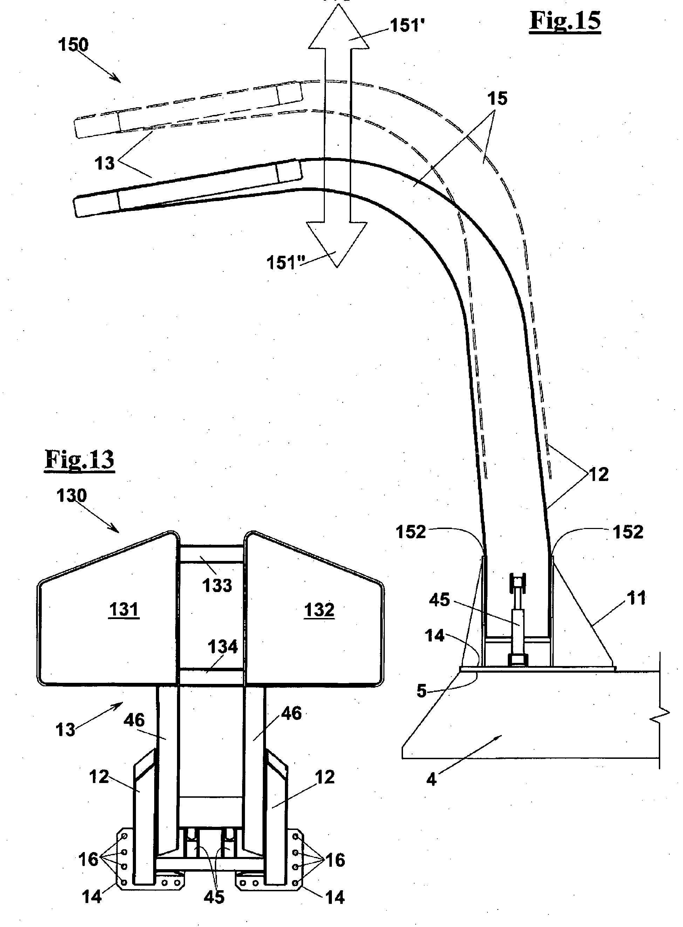

- Fig. 13 shows a protection structure according to a further exemplary embodiment of the invention, with a different outline of the shield of the cover means;
- Fig. 14 is a diagrammatical elevation side view of a protection structure according to an exemplary embodiment of the invention in which the cover means and the upright are integral to each other and are pivotally articulated with the connection portion;
- Fig. 15 is an elevation side diagrammatical view of a protection structure according to an exemplary embodiment of the invention, in which the cover means and the upright are integral to each other and are slidingly articulated with the connection portion;

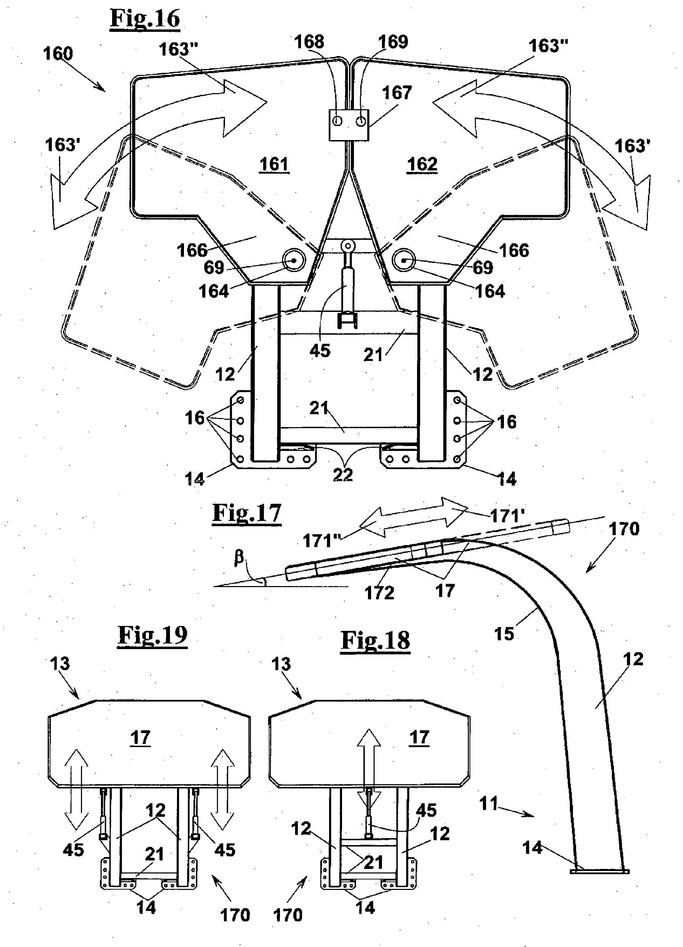

- Fig. 16 is a top plan view of a protection structure, according to an exemplary embodiment of the invention, in which the cover means comprises two cover elements that are pivotally articulated with the frame-connection portion;
- Fig. 17 is an elevation side view of a protection structure according to an exemplary embodiment of the invention, in which the cover means is slidingly articulated with the upright;
- Figs. 18 and 19 show diagrammatically an actuation means for actuating the slide movement of the cover means of the structure of Fig. 17;

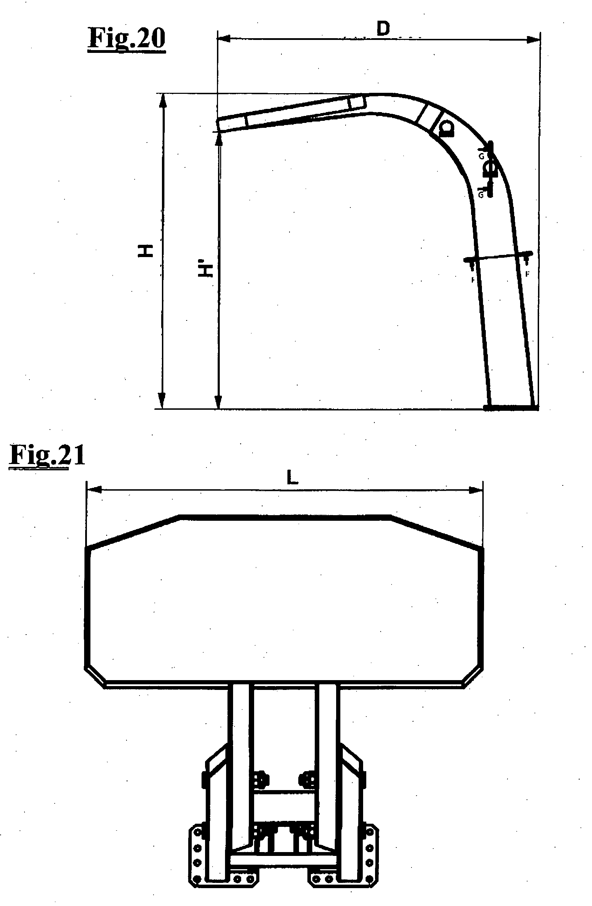

- Figs. 20 and 21 are an elevation side view and a rear view, respectively, of a protection structure, with an indication of some outline dimensions.

### Description of preferred exemplary embodiments

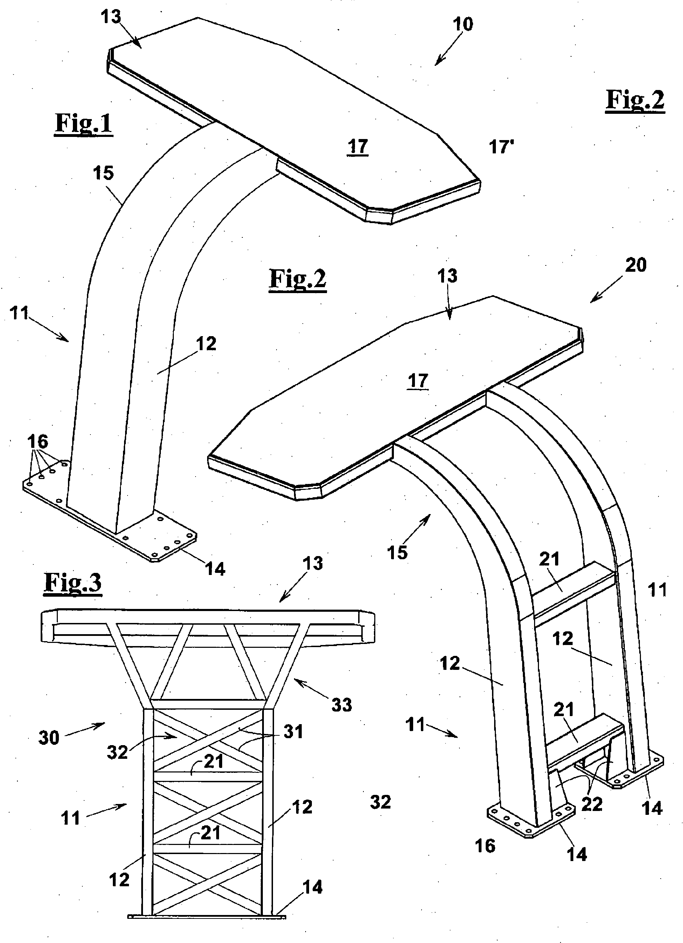

With reference to Fig. 1, a stiff protection structure 10 is described, according to a first exemplary embodiment of the invention, for a cabin or driver compartment 2 of a vehicle, for example of a truck 1 (Figs. 9-11), which comprises a frame 3 to which cabin 2 is fixed, in a front position of the vehicle and of the frame itself. Protection structure 10 comprises a lower portion 11 for connection with frame 3 of vehicle 1. Protection structure 10 comprises, furthermore, an upright 12. When structure 10 is mounted to vehicle 1, upright 12 extends vertically from lower connection portion 11 and therefore from frame 3, behind cabin 2. Due to such a connection of protection structure 10 with vehicle 1, no cabin fastening means has to be provided or built in order to fasten cabin 2 to structure 10. Protection structure 10 has a cover means 13 to cover and protect cabin 2, preferably for all the surface extension of lateral compartment or cabin 2. Cover means 13 is substantially horizontal, and extends in a cantilever fashion from upright 12, above cabin 2. Also cover means 13 has no contact points with cabin 2.

Cover means 13 may comprise, as provided in the exemplary embodiment of Fig. 1, a cover element such as a substantially plane shield 17. Viewed from above, substantially plane shield 17 may have a shape and an extension suitable for completely covering cabin 2. For example, plane shield 17 may have a substantially rectangular shape, which may also have bevelled corner portions 17', as shown in Fig. 1, or a partially curvilinear shape, as shown in Fig. 12.

Cover means 13 may also comprise several cover elements, which may have, for example, a rectangular or trapezoidal shape, as shown in Fig. 13. In o case of vehicles having a lateral compartment or cabin, for example a cabin consisting only of a driver compartment, as in the case of some crane trucks, cover means 13 may extend only at one side with respect to the axis of vehicle 1, in order to cover only such a cabin, not shown, as provided by the present invention.

In another exemplary embodiment, as shown in Fig. 8', a protection structure 80 may have a cover means 13 comprising one or several cover elements 81 stiffened by a frame 82, or comprising a reticular structure. In an exemplary embodiment, not shown, the cover means may comprise one or several rectilinear parallel cantilever cover means, i.e. comb-like cover means.

Lower connection portion 11 to connect vehicle 1 comprises an interface means that is arranged to be connected to frame 3 of vehicle 1. The interface means may comprise a horizontal plate 14 (Fig. 1), or also a vertical one (Fig. 6). For instance, this plate can be a flange that preferably has holes 16 for connection elements such as screws, not represented.

In order to fix the structure to frame 3 of vehicle 1, a counterframe 4 can be provided that is adapted to be mounted to frame 3 without modifying frame 3. In particular, counterframe 4 has holes corresponding to the holes arranged on frame 3 for a bolt connection. Moreover, counterframe 4 has a counterflange 5 that is adapted to be firmly coupled with flange 14 of protection structure 10. In an exemplary embodiment, not shown, counterframe 4 may be integral to protection structure 10. In other words, protection structure 10, or its lower portion 11, may comprise a portion directly coupled with the coupling means of frame 3, typically with the holes provided on frame 3.

Among upright 12 and cover means 13 a connection portion 15 may also be provided that has a curvilinear longitudinal cross section.

With reference to Figs. 2 and 3, two other rigid protection structures 20 and 30 for a cabin 2 are described, according to respective exemplary embodiments of the invention. Structures 20 and 30 comprise two side uprights 12. The connection means 3 to the frame of vehicle 1 may comprise a single flange 14 integral to both uprights 12 (Fig. 3). Alternatively, both uprights 12 have respective end flanges 14 (Fig. 2). Uprights 12 may be linked to each other by transverse connection members 25, as shown in Fig. 2. Alternatively, uprights 12 may form a reticular structure 32 with transverse members 21 and with braces 31. Reticular structure 32 may extend even up to a connection portion 33 between uprights 12 and cover means 13. Small stiffening plates 22 may be provided between uprights 12 and plate 14 (Fig. 2).

With reference to Fig. 4, an articulated protection structure 40 for a cabin 2 is described according to an exemplary embodiment of the invention. In an articulated protection structure like structure 40, cover means 13, in particular plane shield 17, is movably arranged with respect to lower connection portion 11. In this case, uprights 12 are integral to connection plates 14, in other words uprights 12 and plates 14 form lower connection portion 11. Cover means 13 is pivotally articulated to uprights 12. As a matter of fact, in this exemplary embodiment, a rotatable connection or articulation is provided between cover means 13 and upright 12, about a horizontal rotation axis 49. Fig. 4 shows a solution in which two uprights 12 are provided, but a similar rotatable connection can also be made in a protection structure comprising only one upright 12. The rotatable connection is made by means of pins 41 arranged along the direction of rotation axis 49. Each pin 41 can be firmly housed in two aligned holes. More in detail, each pin can be arranged and preferably blocked in a first transversal hole of a respective upright 12, and in a second hole made in a respective connection portion 46 of cover means 13, which extends from shield 17.

In order to actuate the rotation of cover means 13 with respect to connection portion 11, i.e., in this case, with respect to uprights 12, a remotely controlled actuation means may be provided, preferably a hydraulic actuation means. For example, the actuation means may comprise one or more hydraulic actuators 45, each of them comprising a cylinder-piston unit. The cylinder-piston unit has a first end, at cylinder side, that is hinged to a support element 51 of fixed connection portion 11, and a second end, at piston side, that is connected to a connection crosspiece elements 46 integral to cover means 13. For example, the first end of actuator or actuators 45 can be hinged to a support element 51 arranged on a transversal connection element 21 of both uprights 12. This way, by changing the pressure of an operation fluid within a chamber of the cylinder, a rotational upward or downward movement of cover means 13 can be actuated with respect to uprights 12, as diagrammatically indicated by the arrows 111' and 111" of Fig. 11.

Fig. 6 represents another articulated protection structure 60 for a cabin 2 of a vehicle 1 that differs from structure 40 of Fig. 4 only for the shape of connection plates 64 to connect frame 3 of vehicle 1. In this case, connection plates 64 are arranged in a vertical plane and are oriented according to the direction of uprights 12 instead of being oriented transversally to uprights 12.

With reference to Figs. 7 and 8, a rotation lock means is described for locking the rotation of cover means 13 with respect to uprights 12, said lock means preferably provided in protection structures 40, 60 of Fig. 4, 6. The lock means comprises a couple of lock pins 42, each of them possibly firmly housed within two aligned holes. More in detail, each pin can be arranged and preferably blocked within a hole of a first bush 73 transversally arranged in a respective upright 12, and within a hole of a second bush 74 transversally arranged in connection portion 46 that extends from cover means 13. This way, each connection portion 46 can be reciprocally blocked with respect to respective upright 12. More in detail, pins 42 have an enlarged end portion 71 that is adapted to abut engage with a lateral surface of connection portion 46 or, in an embodiment not shown, with a lateral surface of upright 12. Pins 42 also have a screw-threaded portion 72, opposite to portion 71, which is configured to receive a nut 43 in such a way that, by tightening nut 43, pin 42 is secured within the aligned holes of bushings 73,74. Advantageously, locking nut 43 is secured in a self-locking way, for example by a lock nut 44.

Fig. 8', already described above, shows a protection structure 80, according to the invention, which differs from protection structure 40 of Fig. 4 for the shape of cover means 13. In the bottom view of Fig. 8', two abutment plates 88 are also shown that are integral to respective uprights 12. Plates 88 serve as abutment, in order to prevent the cover means and the connection portion from turning beyond the position of the normal configuration.

In Fig. 9 protection structure 80 is shown mounted to frame 3 of a car 1, in this case of a truck, in a use or operation configuration of vehicle 1.

The use of protection structure 40 of Fig. 4 is described with reference to Figs. 10 and 11. The description is valid for any protection structure in which cover means 13 is pivotally articulated with upright or uprights 12 in a rotation about a horizontal axis 49, for example protection structure 60 of Fig. 6. Fig. 10 shows a configuration of operating vehicle 1 and of protection structure 40, where lock pins 42 are arranged in own respective seats, in particular in the holes of bushings 73,74 integral to uprights 12 and to connection elements 46. This way, cover means 13 is locked in a lowered position, in which it is arranged substantially or mainly parallel to the roof of cabin 2 of vehicle 1, at a reduced distance from cabin 2. In the lowered configuration, cover means 13 can protect cabin 2 against crushing in case of fall of stone blocks or of other heavy bodies, and in case of tilting of vehicle 1, to guarantee the safety of people inside the cabin.

When the protection structure is mounted to vehicle 1, uprights 12 are forward-inclined, i.e. they are inclined towards cabin 2, and form an angle γ with the vertical. Angle γ is typically set between 2° and 10°, preferably it is set between 3° and 8°, more in particular, angle γ is about 5°. Cover means 13 forms a substantially right angle with respect to uprights 12. More in detail, this angle is such that cover means 13 forms an angle β with the horizontal, in particular, an angle set between 5° and 10°. More in particular, angle β is set between 6° and 8°, preferably it is about 7°.

On the other hand, Fig. 11 shows a maintenance configuration of vehicle 1, where cover means 13 is at an angle α with respect to the position which it has in the use configuration. Angle α is selected so that cabin 2 can be forward-rotated about a transversal axis of vehicle 1. This allows a space for an operator in a region between cabin 2 and upright 12, to perform maintenance. In any case, the raised position of cover means 13 allows the operator to reach the above space.

As Figs. 10 and 11 show, in an exemplary embodiment, width L (Fig. 21) of cover means 13, i.e. the width of the cantilevered portion extending from upright 12, is at least equal to the width of cabin 2 of vehicle 1. This way, the protection structure can protect the cabin, and prevent it from being crushed not only in case of a heavy bodies falling from the above, but also in case of tilting of vehicle 1 about a substantially or mainly longitudinal axis. In fact, the side edges of cantilever portion 13 provide a lateral protection to cabin 2.

As Fig. 10 still shows, in an exemplary embodiment, a protruding portion D (Fig. 20) of cover means 13, i.e. of the portion cantilevered from upright 12, can cover cabin 2 substantially up to the front portion. This way, the protection structure is adapted to protect the cabin, avoiding a crushing thereof, also in case of a forward tilting of vehicle 1 about a substantially or mainly transversal axis. In fact, the front edge of cantilever portion 13 provides a lateral protection to cabin 2.

Figs. 9, 10 and 11 refer also to a car 1, in particular to a truck, that has a frame 3, a cabin 2 fixed at a front position of frame 3, and that also has a protection structure for cabin 2, of the above described type, for example a protection structure 80 according to an exemplary embodiment, as shown in Fig. 8'. In other words, the protection structure comprises at least one lower connection portion 11 that is arranged to be connected to frame 3 in a way disengaged from cabin 2, an upright 12 that, once mounted, rises vertically from connection portion 11 behind cabin 2, as well as a cover means 13 of cabin 2 extending from upright 12, which can be cantilevered as a plane shield above cabin 2, also contactless with respect to cabin 2.

The maintenance configuration of protection structure 40 is obtained by removing pins 42 from their own housing and by rotating cover means 13 about its rotation axis 49, according to arrow 111'. Once the maintenance of vehicle 1 has been performed, and cabin 2 has returned to its normal position, cover means 13 can be returned to the use configuration. Once the use configuration of structure 40 has been restored, locking pins 42 are introduced into housings 73,74 again.

Fig. 12 shows a protection structure 120 for cabin 2, in which cover means 13 comprises a substantially plane shield 17 that has an at least partially curvilinear shape, viewed from above, for example a semicircle or a half ellipse, protruding forward, in order to cover and protect a cabin 2 with particularly elongated shape. Fig. 13 shows a further protection structure 130, where cover means 13 comprises two shields planes 131, 132 connected to one another by connection elements, in this case by a rear connection element 133 and by a front connection element 134. In the example shown, the two shields planes 131, 132 have a trapezoidal shape viewed from above.

With reference to Fig.14, a further articulated protection structure 140 for a cabin 2 is described according to an exemplary embodiment of the invention. Upright 12 is integral to cover means 13, while it is pivotally articulated with frame connection portion 11 of vehicle 1. In this exemplary embodiment, a rotatable connection or articulation is provided about a horizontal rotation axis 59 of upright 12. More in detail, due to this rotatable connection, cover means 13, along with upright 12, can rotate backwards according to arrow 143', switching from a use configuration to a maintenance configuration, and can also rotate forwards according to arrow 143", in an opposite movement, according to arrow 143". In Fig. 14, a single upright 12 is shown that may extend for all the width of cover means 13 or may be narrower, but the shown solution may even relate to a protection structure comprising two side uprights 12. The rotatable connection is made by means of a pin 141 that is arranged along the direction of rotation axis 59, and that is housed within aligned holes, not shown, made transversally within frame 3-connection portion 11 and within upright 12.

Also in this case, in order to actuate the rotation of cover means 13 and of uprights 12 with respect to connection portion 11, a remotely controlled actuation means is advantageously provided, preferably a hydraulic actuation means. In an exemplary embodiment, not shown, the actuation means may comprise at least one hydraulic actuator, for example at least one cylinder-piston unit. Each cylinder-piston unit may have a first end, for example at the cylinder side, which is hinged to fixed connection portion 11, and a second end, for example at the piston side, which is connected to upright 12.

With reference to Fig. 15, a further articulated protection structure 150 is described for a cabin 2, according to an exemplary embodiment of the invention, in which upright 12 is integral to cover means 13, and is slidingly articulated with connection portion 11 to frame 3. In this exemplary embodiment, in fact, a sliding connection to frame 3 is provided along a guide 152 made in connection portion 11. More in detail, due to this sliding connection, cover means 13, along with upright 12, can carry out a translation towards the above according to arrow 153', switching from a lowered use configuration, to a maintenance configuration. Moreover, cover means 13 can carry out a translation towards below according to arrow 153", switching from the maintenance configuration to the use configuration. In Fig. 15 a single upright 12 is shown, but the solution shown can refer even to a protection structure comprising two side uprights 12. The sliding connection is made with a groove or guide 152 substantially vertical made in connection portion 11, that is adapted to receive slidingly upright 12 or a portion thereof.

Also in this case, for carrying out a translation of cover means 13, along with upright 12, with respect to connection portion 11, remotely controlled actuation means are advantageously provided, preferably of hydraulic type. For example, the actuation means may comprise at least one hydraulic actuator 45. Each actuator 45 may comprise a cylinder-piston unit. The cylinder-piston unit has a first end, in this case at cylinder side, integral or articulated to fixed connection portion 11, and a second end, for example at piston side, integral or articulated to upright 12.

With reference to Fig. 16, a protection structure 160 is described of a cabin 2 according to an exemplary embodiment of the invention, in which cover means 13 comprises two plane shields 161, 162. Each shield 161,162, is pivotally connected to a respective upright 12, and uprights 12, along with plate or flange 14, form lower connection portion 11 to vehicle 1. In this exemplary embodiment, in fact, rotatable connections or joints are provided pivoted about respective vertical rotation axes 69',69" of shields 161,162, with respect to respective upright 12. In Fig. 16 a solution is shown with two uprights 12, but a similar rotatable connection can be made also in a protection structure comprising a single upright 12. The rotatable connection is effected by pins 164, each of which can be firmly housed in two vertically aligned holes, i.e. can be firmly housed in a first hole made in shield 161,162, or in a connection portion 166 thereof, and in a second hole made within a support portion, not visible in Fig. 16, of respective upright 12.

In order to actuate the rotation of shields 161,162 of cover means 13 with respect to connection portion 11, i.e. with respect to uprights 12, in this embodiment actuation means are provided, preferably comprising a hydraulic actuator 45. For example, the hydraulic actuator can comprise a cylinder-piston unit 45. Unit 45 has a first end, in this case at the cylinder side, integral or articulated with upright or uprights 12, and a second end, in this case at the piston side, connected to a couple of stiff rod elements 165, each of which is hinged, in a not shown way, with a respective shield 161,162. For example, the first end of actuator or actuators 45 can be hinged to a connection crosspiece 21 for connecting uprights 12. This way, by changing the pressure of an operation fluid in a chamber of the cylinder, a rotational opening or closure movement of both shields 161,162 can be attained, as diagrammatically shown in Fig. 11 respectively by arrows 163' and 163". In other words, by actuating actuator 45, shields 161,162 can be moved from a closed use configuration to a open maintenance configuration, and vice-versa.

Also the protection structure 160 can be equipped with a means for locking the rotation of shields 161,162 with respect to respective uprights 12, in order to lock the protection structure in the use configuration. The lock means comprises a connection plate 168 and a couple of lock pins 169, each of which can be firmly housed in two aligned holes. More in detail, each pin can be arranged and preferably blocked in a first hole made in a respective shield 161,162, and in a second hole made in connection plate 168. This way, shields 161,162 are locked to each other. In an exemplary embodiment, not shown, pins 169 may have an enlarged end portion that is adapted to abut against a lateral surface of shields 161,162 or of plate 12, and an opposite screw-threaded portion that is adapted to receive a nut. By tightening the nut, pin 169 is secured in the holes, and the use configuration is locked.

With reference to Fig. 17, a protection structure 170 of a cabin 2 is described according to an exemplary embodiment of the invention, in which cover means 13 are slidingly articulated in a substantially or mainly horizontal direction with respect to uprights 12, and uprights 12 are integral to connection portion 11 for connection to vehicle 1. In this exemplary embodiment, in fact, a sliding connection is provided according to a predetermined sliding direction.

In the example of Fig. 17, cover means 13 extends in a plane. In particular, cover means 13 comprises plane shield 17. In this case, cover means 13 comprises a couple of guides or grooves 172, configured to receive slidingly plane shield 17. Therefore, the sliding direction lays in the plane in which cover means 13 extends, and the sliding direction forms an angle equal to angle β with the horizontal, see Fig. 10.

More in detail, due to this sliding connection, cover means 13 can carry out a backward translation according to arrow 173', switching from an advanced use configuration to a withdrawn maintenance configuration. Furthermore, cover means 13 can carry out a forward translation according to arrow 173", switching from the maintenance configuration to the use configuration. In Fig. 17, a single upright 12 is shown, but the solution shown can refer even to a protection structure comprising two side uprights 12. The sliding connection can be made by a groove or guide 171 made along a connection portion of upright 12, substantially or mainly horizontal, that is adapted to slidingly receive cover means 13, in particular substantially plane shield 17 or a portion thereof.

As shown in Figs. 18 and 19, also in this case, for translating cover means 13, along with upright 12, with respect to connection portion 11, a remotely controlled actuation means is advantageously provided, preferably of hydraulic type. For example, the actuation means may comprise a single central hydraulic actuator 45 (Fig. 18), or a plurality of hydraulic actuators 45, for example two side cylinder-piston units, each arranged at a respective upright 12. Each cylinder-piston unit 45 has a first end, in this case at the cylinder side, integral or articulated with upright 12, and a second end, for example at the piston side, integral or articulated with cover means 13.

With reference to Figs. 20 and 21, some size features of the protection structure according to the invention are indicated. Cover means 13 has advantageously a size adapted to cover the whole cabin 2 of vehicle 1. In particular, the width L of cover means 13 in case of protection of a cabin 2 that extends for all the width of vehicle 1, may be set between 1500 and 3000 mm. Cover means 13 may also have a longitudinal length D, with respect to the rearmost point of the lower connection portion, set between 1500 and 4500 mm. Always in Fig. 20, a height H' is shown preferably set between 1000 and 2500 mm, which corresponds to a total height, with respect to the lower part of connection portion 11, set between 1200 and 3000 mm. Obviously, in case of a structure with protection means 13 movable with respect to connection portion 11 of the vehicle, sizes H',H,D refer to a use or operation configuration of the protection structure.

The protection structure according to the invention may be made of a material, typically a metal material, that has a suitable mechanical strength. In particular, the components are made of quality carbon steel, and are preferably protected against atmospheric corrosion.

The foregoing description of various specific exemplary embodiments will so fully reveal the invention according to the conceptual point of view so that other, using the prior art, will be able to modify and/or to adapt for various applications these specific exemplary embodiments without further researches and without parting from the inventive concept, and it is therefore to be understood that such adaptation and changes will have to be considered ad as equivalent of the described specific exemplary embodiments. The means and the material to provide the various functions described herein could have a different nature without, for this reason, departing from the scope of the invention as defined by the claims. It is to be understood that the expressions or the terminology used that is employed herein is for the purpose of description and not of limitation.

## Claims

1. A vehicle (1) consisting of a truck, comprising a frame (3), a driver compartment fixed at a front position of said frame (3) and a protection structure (40,60,80,120,130,140,150,160,170) for said driver compartment (2), said structure comprising:
- a lower connection portion (11) connected to said frame (3) of said vehicle (1) in a way disengaged from said driver compartment (2),
- an upright (12) vertically mounted to said lower connection portion and behind said driver compartment (2);
- a cover means (13) for covering said driver compartment (2), said cover means extending forward from said upright (12), and cantilevered as a plane shield above said driver compartment (2) contactless with respect to said driver compartment (2),
**characterized in that** said cover means (13) is movable with respect to said lower connection portion (11), between a use position, in which said cover means (13) is arranged above said driver compartment, in order to protect said driver compartment (2) in case of fall of heavy bodies onto said driver compartment (2) and/or in case of tilting of the vehicle (1), and a maintenance position, in which said cover means (13) is arranged at a distance from said driver compartment (2), said distance suitable for allowing said driver compartment (2) to move from a use position to a maintenance position and/or suitable for allowing an operator to enter a space between said driver compartment (2) and said upright (12).

2. The vehicle according to claim 1, wherein said cover means (13) is rotatably arranged with respect to said lower connection portion (11).

3. The vehicle according to claim 1, wherein said upright (12) is integral to said lower connection portion (11), and said cover means (13) is rotatably arranged about an axis (49,59,69) that is integral to said upright (12), in particular, said rotation axis (49) is horizontal.

4. The vehicle according to claim 1, wherein said cover means comprises two shields (161,162) pivotally arranged about respective vertical rotation axes (69) that are integral to said upright (12).

5. The vehicle according to claim 1, wherein said upright (12) is integral to said cover means (13), and said cover means (13) along with said upright (12) is pivotally arranged about an axis integral to said lower connection portion (11).

6. The vehicle according to claim 1, wherein said cover means (13) is slidingly arranged with respect to said lower connection portion (11).

7. The vehicle according to claim 7, wherein said upright (12) is integral to said lower connection portion (11), and said cover means (13) is slidingly arranged along a sliding direction,
in particular said sliding direction in use is a longitudinal direction of said vehicle, and forms an angle (β) set between 5° and 10° with respect to an horizontal plane, in particular an angle (β) set between 6° and 8°, more in particular, an angle of about 7°.

8. The vehicle according to claim 7, wherein said upright (12) is integral to said cover means (13), and said cover means (13) along with said upright (12) is slidingly arranged along said upright (12).

9. The vehicle according to claim 1, comprising a lock means (42,73,74,167,168,169) for locking said cover means (13) in said use position.

10. The vehicle according to claim 1, wherein said cover means (13) is selected between:
- a cover means having a width (L) at least substantially equal to a width of said driver compartment in order to protect said driver compartment (2);
- a cover means (13) having a longitudinal length (D) suitable for covering said driver compartment (2) substantially up to a front portion of said driver compartment (2),
in order to protect said driver compartment (2) in case of a tilting of said vehicle (1) about a substantially longitudinal tilt axis and/or in case of a forward tilting of said vehicle (1) about a substantially transverse axis, respectively.

11. The vehicle according to claim 1, wherein said cover means (13) is selected between:
- a cover means comprising a continuous shield (17,131,132,161,162).
- a cover means comprising a plurality of linear cover elements (81) parallel to each other, in particular said cover elements (81) are connected by a stiffening frame (82).

12. The vehicle according to claim 1, comprising at least two uprights (12) to which connection members are connected, in particular said connection members selected from the group comprised of:
- transverse members (21);
- a reticular structure (32);
- a combination thereof.

13. The vehicle according to claim 1, wherein said upright (12) is inclined, in use, towards said driver compartment (2), in particular creating an angle (γ) with the vertical, said angle set between 2° and 10°, in particular set between 3° and 8°, more in particular, an angle (γ) of about 5°.

14. The vehicle according to claim 1, comprising a counterframe (4) that is adapted to be reversibly mounted to said frame (3), said counterframe (4) and said lower portion (11) of said structure having a mutual connection means (5,14), in particular said connection means comprises a couple of flanges (5,14)

15. The vehicle according to claim 1, comprising a curved connection portion (15) between said upright (12) and said cover means (13),
in particular said curved connection portion (15) comprises a rear connection portion (46) of said cover means (13) and an upper connection portion (47) of said upright (12), said rotatable connection arranged between said rear portion (46) and said upper portion (47).

## Patentansprüche

1. Fahrzeug (1), bestehend aus einem Lastkraftwagen, der einen Rahmen (3), einen auf einer vorderen Position des Rahmens (3) befestigten Führerstand und einen Schutzaufbau (40, 60, 80, 120, 130, 140, 150, 160, 170) für den Führerstand (2) aufweist, wobei der Aufbau aufweist:
- einen unteren Verbindungsteil (11), der mit dem Rahmen (3) des Fahrzeugs (1) in einer Weise verbunden ist, die von dem Führerstand (2) gelöst ist,
- eine Säule (12), die vertikal an dem unteren Verbindungsteil und hinter dem Führerstand (2) angebracht ist;
- ein Schutzabdeckungsmittel (13) zum Überdecken des Führerstands (2), wobei das Schutzabdeckungsmittel sich von der Säule (12) nach vorne und ausladend als ein ebenes Schild über den Führerstand (2) ohne Kontakt in Bezug auf den Führerstand (2) erstreckt,
**dadurch gekennzeichnet, dass** das Schutzabdeckungsmittel (13) in Bezug auf den unteren Verbindungsteil (11) zwischen einer Einsatzposition, in der das Schutzabdeckungsmittel (13) über dem Führerstand angeordnet ist, um den Führerstand (2) vor auf den Führerstand (2) herabfallenden schweren Körpern und/oder im Fall eines Umkippens des Fahrzeugs (1) zu schützen, und einer Wartungsposition, in der das Schutzabdeckungsmittel (13) in einem Abstand von dem Führerstand (2) angeordnet ist, wobei der Abstand geeignet ist, den Führerstand (2) aus einer Einsatzposition in eine Wartungsposition bewegen zu können und/oder geeignet ist, es einer Bedienungsperson zu ermöglichen, einen Raum zwischen dem Führerstand (2) und der Säule (12) zu betreten.

2. Fahrzeug nach Anspruch 1, wobei das Schutzabdeckungsmittel (13) in Bezug auf den unteren Verbindungsteil (11) drehbar angeordnet ist.

3. Fahrzeug nach Anspruch 1, wobei die Säule (12) mit dem unteren Verbindungsteil (11) fest verbunden ist und das Schutzabdeckungsmittel (13) um eine Achse (49, 59, 69) drehbar angeordnet ist, die mit der Säule (12) fest verbunden ist, wobei die Drehachse (49) insbesondere horizontal ist.

4. Fahrzeug nach Anspruch 1, wobei das Schutzabdeckungsmittel zwei Schilde (161, 162) aufweist, die um jeweilige vertikale Drehachsen (69) schwenkbar angeordnet sind, die mit der Säule (12) fest verbunden sind,

5. Fahrzeug nach Anspruch 1, wobei die Säule (12) mit dem Schutzabdeckungsmittel (13) fest verbunden ist und das Schutzabdeckungsmittel (13) zusammen mit der Säule (12) um eine Achse schwenkbar angeordnet ist, die mit dem unteren Verbindungsteil (11) fest verbunden ist.

6. Fahrzeug nach Anspruch 1, wobei das Schutzabdeckungsmittel (13) in Bezug auf den unteren Verbindungsteil (11) verschiebbar angeordnet ist.

7. Fahrzeug nach Anspruch 7, wobei die Säule (12) mit dem unteren Verbindungsteil (11) fest verbunden ist und das Schutzabdeckungsmittel (13) entlang einer Verschieberichtung verschiebbar angeordnet ist,
wobei insbesondere die Verschieberichtung im Einsatz eine Längsrichtung des Fahrzeugs ist und einen Winkel (β) bildet, der in Bezug auf eine horizontale Ebene zwischen 5° und 10° liegt, insbesondere einen Winkel (β), der zwischen 6° und 8° liegt, noch spezieller ein Winkel von ungefähr 7° ist.

8. Fahrzeug nach Anspruch 7, wobei die Säule (12) mit dem Schutzabdeckungsmittel (13) fest verbunden ist und das Schutzabdeckungsmittel (13) zusammen mit der Säule (12) entlang der Säule (12) verschiebbar angeordnet ist.

9. Fahrzeug nach Anspruch 1, das ein Verriegelungsmittel (42, 73, 74, 167, 168, 169) zum Versiegeln des Schutzabdeckungsmittels (13) in der Einsatzposition aufweist.

10. Fahrzeug nach Anspruch 1, wobei das Schutzabdeckungsmittel (13) ausgewählt wird zwischen:
- einem Schutzabdeckungsmittel mit einer Breite (L), die mindestens gleich einer Breite des Führerstands ist, um den Führerstand (2) zu schützen;
- einem Schutzabdeckungsmittel (13) mit einer Längslänge (D), die geeignet ist, den Führerstand (2) im Wesentlichen bis zu einem vorderen Teil des Führerstands (2) zu überdecken,
um den Führerstand (2) jeweils im Fall eines Umkippens des Fahrzeugs (1) um eine im Wesentlichen längs verlaufende Kippachse und/oder im Fall eines Vorwärtskippens des Fahrzeugs (1) um eine im Wesentlichen quer verlaufende Achse zu schützen.

11. Fahrzeug nach Anspruch 1, wobei das Schutzabdeckungsmittel (13) ausgewählt wird zwischen:
- einem Schutzabdeckungsmittel, das ein durchgehendes Schild (17, 131, 132, 161, 162) aufweist.
- einem Schutzabdeckungsmittel, das eine Vielzahl von linearen Schutzabdeckungselementen (81) aufweist, die zueinander parallel sind, wobei die Schutzabdeckungselemente (81) insbesondere durch einen Versteifungsrahmen (82) verbunden sind.

12. Fahrzeug nach Anspruch 1, das mindestens zwei Säulen (12) aufweist, mit denen Verbindungsglieder verbunden sind, wobei die Verbindungsglieder insbesondere aus der Gruppe ausgewählt werden, die sich zusammensetzt aus:
- Transversalgliedern (21);
- einer gitterförmigen Struktur (32);
- einer Kombination davon.

13. Fahrzeug nach Anspruch 1, wobei die Säule (12) im Einsatz zum Führerstand (2) hin geneigt ist, wobei insbesondere ein Winkel (γ) mit der Vertikalen geschaffen wird, wobei der Winkel zwischen 2° und 10° liegt, insbesondere zwischen 3° und 8° liegt, noch spezieller ein Winkel (γ) von ungefähr 5° ist.

14. Fahrzeug nach Anspruch 1, das einen Gegenrahmen (4) aufweist, der so angepasst ist, dass er umlegbar auf dem Rahmen (3) befestigt werden kann, wobei der Gegenrahmen (4) und der untere Teil (11) der Struktur ein gegenseitiges Verbindungsmittel (5, 14) aufweisen, wobei das Verbindungsmittel insbesondere einige Flansche (5, 14) aufweist.

15. Fahrzeug nach Anspruch 1, das einen gebogenen Verbindungsteil (15) zwischen der Säule (12) und dem Schutzabdeckungsmittel (13) aufweist,
wobei insbesondere der gebogene Verbindungsteil (15) einen rückwärtigen Verbindungsteil (46) des Schutzabdeckungsmittels (13) und einen oberen Verbindungsteil (47) der Säule (12) aufweist, wobei die drehbare Verbindung zwischen dem rückwärtigen Teil (46) und dem oberen Teil (47) angeordnet ist.

## Revendications

1. Un véhicule (1) composé d'un camion comprenant un châssis (3), un poste de conduite fixe dans une position située à l'avant dudit châssis (3), et une structure de protection (40,60,80,120,130,140,150,160,170) pour ledit poste de conduite (2), ladite structure comprenant :
- une partie de raccordement inférieure (11) raccordée audit châssis (3) dudit véhicule (1) de façon à être détachée dudit poste de conduite (2),
- un montant (12) monté verticalement sur ladite partie de raccordement inférieure et derrière ledit poste de conduite (2),
- un toit de protection (13) couvrant ledit poste de conduite (2), ledit toit de protection étant déployé vers l'avant depuis ledit montant (12), et placé en porte-à-faux formant un écran plat au-dessus dudit poste de conduite (2), sans être en contact avec ledit poste de conduite (2),
**caractérisé en ce que** ledit toit de protection (13) peut être déplacé relativement à ladite partie de raccordement inférieure (11) entre une position de service, dans laquelle ledit toit de protection (13) est placé au-dessus dudit poste de conduite afin de protéger ledit poste de conduite (2) contre la chute d'objets lourds sur ledit poste de conduite (2) et/ou en cas de renversement du véhicule (1), et une position de maintenance, dans laquelle ledit toit de protection (13) est placé à une certaine distance dudit poste de conduite (2), cette distance étant appropriée pour permettre le déplacement dudit poste de conduite (2) d'une position de service à une position de maintenance et/ou pour permettre à un opérateur de s'introduire dans un espace entre ledit poste de conduite (2) et ledit montant (12).

2. Le véhicule selon la revendication 1, ledit toit de protection (13) étant disposé de façon rotative relativement à ladite partie de raccordement inférieure (11).

3. Le véhicule selon la revendication 1, ledit montant (12) faisant partie intégrante avec ladite partie de raccordement inférieure (11), et ledit toit de protection (13) étant disposé de façon rotative autour d'un axe (49,59,69) faisant partie intégrante avec ledit montant (12), en particulier ledit axe de rotation (49) étant horizontal.

4. Le véhicule selon la revendication 1, ledit toit de protection comprenant deux écrans (161,162) pivotant autour d'axes de rotation verticaux correspondants (69) faisant partie intégrante avec ledit montant (12).

5. Le véhicule selon la revendication 1, ledit montant (12) partie intégrante avec ledit toit de protection (13), et ledit toit de protection (13), conjointement avec ledit montant (12), étant disposés de façon à pivoter autour d'un axe incorporé dans ladite partie de raccordement inférieure (11).

6. Le véhicule selon la revendication 1, ledit toit de protection (13) étant disposé de façon coulissante relativement à ladite partie de raccordement inférieure (11).

7. Le véhicule selon la revendication 7, ledit montant (12) faisant partie intégrante avec ladite partie de raccordement inférieure (11), et ledit toit de protection (13) étant disposé de façon coulissante dans une direction de coulissement,
en particulier ladite direction de coulissement étant, en cours d'usage, une direction longitudinale dudit véhicule, et formant un angle (β) réglé entre 5° et 10° relativement à un plan horizontal, en particulier un angle (β) réglé entre 6° et 8°, et plus particulièrement un angle d'environ 7°.

8. Le véhicule selon la revendication 7, ledit montant (12) faisant partie intégrante avec ledit toit de protection (13), et ledit toit de protection (13), conjointement avec ledit montant (12), étant disposés de façon à coulisser le long dudit montant (12).

9. Le véhicule selon la revendication 1, comprenant un dispositif de verrouillage (42,73,74,167,168,169) pour verrouiller ledit toit de protection (13) dans ladite position de service.

10. Le véhicule selon la revendication 1, ledit toit de protection (13) étant sélectionné entre :
- un toit de protection dont la largeur (L) est au moins substantiellement égale à une largeur dudit poste de conduite, afin de protéger ledit poste de conduite (2) ;
- un toit de protection (13) dont la longueur longitudinale (D) est appropriée pour couvrir ledit poste de conduite (2) substantiellement jusqu'à une partie antérieure dudit poste de conduite (2),
de façon à protéger ledit poste de conduite (2) en cas de renversement dudit véhicule (1) autour d'un axe de pivotement substantiellement longitudinal et/ou en cas d'inclinaison en avant dudit véhicule (1) autour d'un axe substantiellement transversal, respectivement.

11. Le véhicule selon la revendication 1, ledit toit de protection (13) étant sélectionné entre :
- un toit de protection composé d'un écran continu (17,131,132,161,162).
- un toit de protection comprenant une pluralité d'éléments de protection linéaires (81) parallèles entre eux, en particulier lesdits éléments de protection linéaires (81) étant raccordés par un cadre raidisseur (82).

12. Le véhicule selon la revendication 1, comprenant au moins deux montants (12) auxquels sont raccordés des éléments de raccordement, lesdits éléments de raccordement étant notamment sélectionnés dans un groupe composé :
- d'éléments transversaux (21) ;
- d'une structure réticulaire (32) ;
- d'une combinaison de ces derniers.

13. Le véhicule selon la revendication 1, ledit montant (12) étant incliné, en cours d'usage, vers ledit poste de conduite (2), en formant notamment un angle (γ) par rapport à la verticale, cet angle étant réglé entre 2° et 10°, plus particulièrement réglé entre 3° et 8°, et plus particulièrement encore un angle (γ) égal à environ 5°.

14. Le véhicule selon la revendication 1, comprenant un faux-châssis (4) adapté pour être monté de façon réversible audit châssis (3), ledit faux-châssis (4) et ladite partie inférieure (11) de ladite structure comprenant un dispositif de raccordement réciproque (5,14), en particulier ledit dispositif de raccordement comprenant une paire de brides (5,14).

15. Le véhicule selon la revendication 1, comprenant une partie de raccordement courbe (15) entre ledit montant (12) et ledit toit de protection (13),
en particulier ladite partie de raccordement courbe (15) comprenant une partie de raccordement postérieure (46) dudit toit de protection (13), et une partie de raccordement supérieure (47) dudit montant (12), ledit raccordement rotatif étant disposé entre ladite partie de raccordement postérieure (46) et ladite partie de raccordement supérieure (47).
